# EUROPEAN PATENT SPECIFICATION

(11) **EP 4 574 757 B1**
(45) Date of publication and mention of the grant of the patent: **29.04.2026**
(21) Application number: 24214188.5
(22) Date of filing: 20.11.2024
(51) Int. Cl.: C01B 32/159, B82Y 30/00, B82Y 40/00, C01B 32/168, C01B 32/174, C09D 7/45, C09D 7/65, C08L 39/06, C08L 39/08

(54) **NONAQUEOUS CARBON NANOTUBE DISPERSION LIQUID**
NICHTWÄSSRIGE KOHLENSTOFFNANORÖHRCHENDISPERSIONSFLÜSSIGKEIT
LIQUIDE DE DISPERSION DE NANOTUBES DE CARBONE NON AQUEUX

(30) Priority: 20.12.2023 JP 2023214428
(43) Date of publication of application: 25.06.2025
(73) Proprietor: Kabushiki Kaisha F.C.C., Hamamatsu-shi, Shizuoka 431-1394 (JP)
(72) Inventor: Ogawa, Ayumu, Hamamatsu-shi, Shizuoka, 4311394 (JP); Iida, Kaoru, Hamamatsu-shi, Shizuoka, 4311394 (JP); Amma, Yuto, Hamamatsu-shi, Shizuoka, 4311394 (JP)
(74) Representative: Grünecker Patent- und Rechtsanwälte PartG mbB

(56) References cited:
- WO-A1-2023/068780
- US-A1- 2016 020 466
- US-A1- 2022 173 403
- US-A1- 2023 361 308

## Description

### BACKGROUND OF THE INVENTION

### 1. Field of the Invention

The present invention relates to nonaqueous carbon nanotube dispersion liquids.

### 2. Description of the Related Art

Conventionally, for example, a carbon nanotube (hereinafter also referred to as "CNT") dispersion liquid in which CNTs are dispersed in a predetermined solvent has been generally used as a conductive auxiliary agent of a secondary battery or the like. Conventional references in regard to this include Japanese Patent No. 6274309, Japanese Patent No. 6079138, Japanese Patent No. 4182215, and Japanese Patent No. 6531926. For example, Japanese Patent No. 6274309 describes an aqueous CNT dispersion liquid including CNTs, a dispersant with a weight-average molecular weight of 1000 to 400000, a volatile salt, and an aqueous solvent. In addition, Japanese Patent No. 6274309 discloses that CNTs with an average fiber length of 10 µm or less are preferable as the CNTs described above.

As a dispersion medium, it has been desired to use a nonaqueous solvent (organic solvent not containing moisture) instead of an aqueous solvent because drying is easy, for example. Japanese Patent No. 4182215 describes a CNT dispersion solution including CNTs not subjected to a fluorination process, an amide based polar organic solvent, and polyvinylpyrrolidone (PVP) and not including a non-ionic surfactant. US 2022/173403 A1 discloses a dispersant composition for carbon nanotubes, containing: a copolymer that includes a structural unit A and a structural unit B; and a solvent, wherein the content of the structural unit B in all structural units of the copolymer is 20 mass % or more. US 2023/361308 A1 discloses a dispersion of carbon nanotubes comprising an organic medium, carbon nanotubes dispersed in the organic medium, and a dispersant. It further discloses slurry compositions that include such dispersions, electrodes produced from the slurry composition, and electrical storage devices that comprise the electrode. WO 2023/068780 A1 discloses a carbon nanotube dispersion liquid comprising: carbon nanotubes; a first dispersant having an amide group; and an acryl-based second dispersant having one or more functional groups selected from the group consisting of a hydroxyl group and a carboxyl group. US 2016/020466 A1 discloses a dispersion comprising a dispersion medium, a polymeric dispersing agent, and carbon nanotubes dispersed in the dispersion medium.

### SUMMARY OF THE INVENTION

From the viewpoints of improving the conductivity and the like, it has been demanded to use CNTs with longer fiber length (for example, an average fiber length of 100 µm or more) in the CNT dispersion liquid. According to the present inventors' examination, however, the CNTs with the long fiber length tend to get entangled and aggregate in the nonaqueous solvent. Therefore, sudden thickening occurs in a dispersion process, making the dispersion itself difficult or the viscosity of the CNT dispersion liquid becomes too high, making it difficult to handle.

Example embodiments of the present invention provide nonaqueous carbon nanotube dispersion liquids including carbon nanotubes with an average fiber length of 125 µm or more and 375 µm or less and a nonaqueous solvent being formed of an aprotonic polar solvent by 50 mass% or more, in which thickening is reduced or prevented.

According to an example embodiment of the present invention, a carbon nanotube dispersion liquid includes carbon nanotubes with an average fiber length of 125 µm or more and 375 µm or less, a nonaqueous solvent being formed of an aprotonic polar solvent by 50 mass% or more, and a dispersant that is soluble in the nonaqueous solvent and has a weight-average molecular weight of 70000 or more, in which a content of the dispersant is 10 parts by mass or more and 500 parts by mass or less relative to 100 parts by mass of the carbon nanotubes. The dispersant includes a vinyl pyrrolidone polymer including a vinyl pyrrolidone unit as a repeating unit with the dispersant being formed of the vinyl pyrrolidone polymer by 98 mass% or more. The carbon nanotubes have a concentration of 0.01 mass% or more and 10 mass% or less with respect to the entire carbon nanotube dispersion liquid.

With the use of the carbon nanotubes with an average fiber length of 125 µm or more and 375 µm or less, a conductive network is easily formed relatively and the conductivity can be improved in comparison to a case of using carbon nanotubes with short fiber length as described in Japanese Patent No. 6274309, for example. With the use of the aforementioned carbon nanotubes together with the dispersant with a weight-average molecular weight of 70000 or more in the nonaqueous solvent, the aggregation of the carbon nanotubes can be reduced or prevented and the dispersibility of the carbon nanotubes can be improved. As a result, the thickening of the dispersion liquid can be reduced or prevented.

According to example embodiments of the present invention, nonaqueous carbon nanotube dispersion liquids including the carbon nanotubes with an average fiber length of 100 µm or more and the nonaqueous solvent, in which thickening is reduced or prevented, can be provided.

The above and other elements, features, steps, characteristics and advantages of the present invention will become more apparent from the following detailed description of the example embodiments with reference to the attached drawings.

### BRIEF DESCRIPTION OF THE DRAWINGS

FIG. 1 is a schematic diagram of a nonaqueous CNT dispersion liquid.
FIG. 2 is a graph expressing the viscosity of a nonaqueous CNT dispersion liquid in a case of using a CNT 3 (CNTs with an average fiber length of 250 µm).

### DETAILED DESCRIPTION OF THE EXAMPLE EMBODIMENTS

Example embodiments of the present invention will be described below with reference to the drawings. Note that the example embodiments described herein do not limit the present invention in particular as a matter of course. The elements, features, characteristics, etc., with the same operation are denoted by the same reference signs and the overlapping description may be omitted or simplified as appropriate. Moreover, in the present specification, the notation "X to Y" (X and Y are arbitrary numerals) for a range signifies a value more than or equal to X and less than or equal to Y, and is meant to encompass also the meaning of being "more than X" and "less than Y".

A nonaqueous CNT dispersion liquid according to this example embodiment includes (A) CNTs with an average fiber length of 100 µm or more, (B) a nonaqueous solvent, and (C) a dispersant that is soluble in the nonaqueous solvent and has a weight-average molecular weight of 70000 or more. The nonaqueous CNT dispersion liquid according to this example embodiment may further include another optional component, for example (D) an additive or the like, as necessary.

A CNT is fibrous carbon with a structure in which graphite constituting graphene is rounded into a tubular shape. CNTs are not limited in particular except that the average fiber length is 100 µm or more, and one kind, or two or more kinds of conventionally known CNTs can be used as appropriate. The CNT may be a single-layer carbon nanotube with a structure in which one layer of graphite is rounded into a tubular shape, or a multilayer carbon nanotube with a structure in which two or more layers of graphite are rounded into a tubular shape. The CNT may include impurities (for example, catalyst or amorphous carbon) derived from a manufacturing method, for example.

In this example embodiment, the CNTs have an average fiber length of 125 µm or more. When the average fiber length is the predetermined value or more, it becomes easy to form a conductive network effectively and the conductivity can be improved. In addition, when the average fiber length is long in this manner, the CNTs easily get entangled and aggregate with each other in the nonaqueous solvent. Therefore, it is particularly effective to apply the art disclosed herein. The CNTs have an average fiber length of 375 µm or less. The CNTs may have an average fiber length of 250 µm or less. When the average fiber length is the predetermined value or less, the CNTs will not get entangled easily in the nonaqueous solvent and the dispersibility of the CNTs can be improved more. Therefore, the effects of the example embodiments disclosed herein can be achieved easily at a high level and both the dispersibility and the conductivity can be obtained at a high level.

Note that the average fiber length of the CNTs can be calculated based on the number-average value obtained by observing a plurality of CNTs with an electron microscope and measuring the length of each CNT in a major-axis direction. More specifically, for example, the average fiber length of the CNTs can be calculated based on the number-average value obtained by the observation performed using a scanning electron microscope (SEM) at a magnification of, for example, 10000 and measuring the lengths of 50 CNTs extracted arbitrarily from the visual field in the major axis direction.

The average outer diameter (average diameter) of the CNTs is not limited in particular and is preferably 3 nm or more, more preferably 5 nm or more, and still more preferably 8 nm or more. When the average outer diameter of the CNTs is the predetermined value or more, even the dispersant with the large weight-average molecular weight as with example embodiments disclosed herein can enter between bundles of the CNTs, so that the aggregation of the CNTs is reduced or prevented easily and the effects of the example embodiments disclosed herein are achieved easily at the high level. Eventually, at the time of dispersion, excess stress is not easily applied on the CNTs and the CNTs are not cut easily. Thus, the aforementioned average fiber length can be kept easily.

The average outer diameter of the CNTs is preferably 100 nm or less, more preferably 50 nm or less, still more preferably 20 nm or less, and particularly preferably 10 nm or less. When the average outer diameter of the CNTs is the predetermined value or less, the number of CNTs per unit mass increases, so that the conductive network can be formed efficiently. Thus, the conductivity can be improved more. Note that the average outer diameter of the CNTs can be calculated based on the number-average value obtained by observing the plurality of CNTs with the electron microscope and measuring the length of each CNT in a minor-axis direction. More specifically, for example, the average outer diameter of the CNTs can be calculated based on the number-average value obtained by the observation performed using a transmission electron microscope (TEM) at a magnification of, for example, 400000 and measuring the lengths of 50 CNTs extracted arbitrarily from the visual field in the minor axis direction.

The aspect ratio (average fiber length/average outer diameter) of the CNTs is not limited in particular and is preferably 100 to 100000, more preferably 1000 to 50000, and still more preferably 5000 to 25000. When the aspect ratio is in the aforementioned range, the effects of the example embodiments disclosed herein can be achieved easily at a high level and both the dispersibility and the conductivity can be obtained at a high level.

In the Raman spectrum measured in accordance with laser Raman spectroscopy using a semiconductor laser, a ratio (I_{G}/I_{D}) of an intensity I_{G} of a G band appearing around 1580 cm⁻¹ to an intensity I_{D} of a D band appearing around 1350 cm⁻¹ is preferably generally 10 or less, for example more preferably 1 to 8, and in some example embodiments, still more preferably 1 to 2. The G band is the peak derived from a crystal structure of the CNT and the D band is the peak derived from a defect structure of the CNT. Therefore, as the ratio (I_{G}/I_{D}) is larger, the crystallinity is higher and the higher conductivity can be achieved. When the ratio (I_{G}/I_{D}) is the predetermined value or less, the dispersibility of the CNTs can be improved more.

When the entire nonaqueous CNT dispersion liquid is 100 mass%, the concentration of the CNTs is generally 0.01 to 10 mass%, although there is no particular limitation. The concentration of the CNTs is more preferably 0.1 mass% or more, for example, 0.2 mass% or more, 0.3 mass% or more, and still more preferably 0.4 mass% or more. When the concentration of the CNTs is the predetermined value or more, it becomes easy to form the conductive network effectively and the conductivity can be improved. On the other hand, the CNTs easily get entangled and aggregate with each other in the nonaqueous solvent. Therefore, it is particularly effective to apply the example embodiments disclosed herein. The concentration of the CNTs is more preferably 5 mass% or less, for example, 2 mass% or less, and still more preferably 1 mass% or less. When the concentration of the CNTs is the predetermined value or less, the CNTs get close to each other less easily and moreover, the effects of the example embodiments disclosed herein are achieved easily at the high level. Accordingly, the dispersibility of the CNTs can be improved more.

The nonaqueous solvent is a dispersion medium to disperse at least the CNTs. The nonaqueous solvent does not contain moisture substantially. The amount of moisture in the nonaqueous solvent is preferably 1000 ppm or less, more preferably 500 ppm or less, and particularly preferably 100 ppm or less. The amount of moisture in the nonaqueous solvent can be measured by, for example, a Karl Fischer titration method (JIS K 0068:2001).

The kind of nonaqueous solvent is not limited in particular and one kind of organic solvent or two or more kinds of organic solvents can be used in combination as appropriate in accordance with the application of the nonaqueous CNT dispersion liquid, for example. Examples of the organic solvent include: aprotonic polar solvents such as N-methyl-2-pyrrolidone (NMP), N,N-dimethyl formamide, N,N-dimethyl acetoamide, and dimethyl sulfoxide; alcohol solvents such as methanol, ethanol, n-propanol, isopropanol, and cyclohexanol; ester solvents such as methyl acetate, ethyl acetate, butyl acetate, methyl butyrate, ethyl butyrate, butyl butyrate, methoxy butyl acetate, methyl cellosolve acetate, ethyl cellosolve acetate, propylene glycol monomethyl ether acetate, and γ-butyrolactone; carbonate solvents such as dimethyl carbonate, diethyl carbonate, ethylene carbonate, and propylene carbonate; ketone solvents such as acetone, methyl ethyl ketone, and cyclohexanone; hydrocarbon solvents such as toluene, xylene, cyclohexane, and heptane, and the like. Above all, the aprotonic polar solvent is preferable and NMP is particularly preferable.

The nonaqueous solvent is formed of the aprotonic polar solvent (for example, NMP) mainly (component that occupies 50 mass% or more), preferably formed of the aprotonic polar solvent (for example, NMP) by 80 mass% or more, and more preferably formed of the aprotonic polar solvent (for example, NMP) by 95 mass% or more, and it is particularly preferable that the nonaqueous solvent be substantially formed of the aprotonic polar solvent (for example, NMP) (98 mass% or more be the aprotonic polar solvent (for example, NMP)). The aprotonic polar solvent (for example, NMP) can dissolve many kinds of organic substances, particularly (C) a dispersant to be described below. Therefore, using the aprotonic polar solvent (for example, NMP) by the predetermined value or more can increase the range of choices for the dispersant.

The dispersant is a component that disperses the CNTs in the nonaqueous solvent. In this example embodiment, the dispersant is a compound that is soluble in the nonaqueous solvent to be used. As the dispersant, the dispersant that is soluble in the nonaqueous solvent and satisfies the weight-average molecular weight to be described below (a weight-average molecular weight of 70000 or more) may be used without particular limitations, and one kind or two or more kinds of the conventionally known compounds can be used as appropriate in accordance with the application of the nonaqueous CNT dispersion liquid, the kind of nonaqueous solvent, or the like. The dispersant can be typically a polymer compound having at least one kind of functional group selected from a cationic group, an anionic group, and a nonionic group in a molecule. Note that, in this specification, the term "being soluble" refers to having a solubility of 1 mass% or more in the nonaqueous solvent to be used under an environment of 25°C.

This polymer compound may be any of a homopolymer, a block copolymer, an alternate copolymer, a random copolymer, and a graft copolymer. The molecular structure of the polymer compound may be any of (1) a straight chain type with a linear shape, (2) a branched chain type in which one or a plurality of side chains (carbon chain branched from a main chain, which similarly applies to the description below, such as a graft chain) are connected to a main skeleton with a linear shape (carbon chain whose carbon number is the maximum, which similarly applies to the description below), and (3) a comb type in which a plurality of side chains are regularly arranged along a main skeleton. Among those above, the straight chain type is preferable because the effects of the example embodiments disclosed herein can be achieved at the high level. The dispersant includes a vinyl pyrrolidone polymer. It has been known that the vinyl pyrrolidone polymer is adsorbed on a surface of a CNT and wraps the CNT, that is, exhibits suitably a so-called wrapping effect. Therefore, by including the vinyl pyrrolidone polymer, the effects of the example embodiments disclosed herein are achieved easily at a high level.

The vinyl pyrrolidone polymer is a polymer (PVP) that includes a vinyl pyrrolidone unit (VP unit) as a main repeating unit, and its derivative. The vinyl pyrrolidone polymer is typically of a straight chain type. In the vinyl pyrrolidone polymer, the proportion of the VP units in the entire repeating units is preferably 50 mol% or more, and substantially all the repeating units may be formed of the VP units. Specific examples of the vinyl pyrrolidone polymer include polyvinylpyrrolidone (PVP), a copolymer of vinyl pyrrolidone and vinyl acetate, a copolymer of vinyl pyrrolidone and dimethylaminoethyl-methacrylic acid, a copolymer of vinyl pyrrolidone and vinyl alcohol, their modified products, and the like. In particular, PVP is preferable from the viewpoints of the high availability and the like.

The vinyl alcohol polymer is typically a polymer (PVA) including a vinyl alcohol unit (VA unit) as a main repeating unit, and its derivative. The vinyl alcohol polymer is typically of a straight-chain type. The proportion of the VA units in the entire repeating units is preferably 50 mol% or more and substantially all the repeating units may be formed of the VA units. Specific examples of the vinyl alcohol polymer include polyvinyl alcohol (PVA), polyvinyl butyral (PVB), their modified products, and the like.

The maleic acid polymer is a polymer including a maleic acid unit as a main repeating unit, and its derivative. The maleic acid polymer includes a maleic acid (open ring state) polymer and a maleic anhydride (closed ring state) polymer. Specific examples of the maleic acid polymer include poly(ethylene maleic acid), poly(isobutylene maleic acid), poly(styrene maleic acid), poly(methyl vinyl ether maleic anhydride), their modified products, and the like.

The dispersant is substantially formed of the vinyl pyrrolidine polymer (for example, PVP) (98 mass% or more be the vinyl pyrrolidine polymer (for example, PVP)).

In this example embodiment, the dispersant has a weight-average molecular weight (Mw) of 70000 or more. The dispersant has a weight-average molecular weight of more preferably 72000 or more and still more preferably 74000 or more, for example. In some example embodiments, the dispersant has a weight-average molecular weight of more preferably 81000 or more and still more preferably 82000 or more, for example. When the weight-average molecular weight is the predetermined value or more, the effects of the example embodiments disclosed herein are achieved easily at the high level, which will be described below in detail. The dispersant has a weight-average molecular weight of preferably 100000 or less, more preferably 95000 or less, and still more preferably 90000 or less. When the weight-average molecular weight is the predetermined value or less, the dispersant easily enters between the bundles of the CNTs, so that the dispersibility of the CNTs can be improved more. Furthermore, the conductivity of the CNTs is not easily interrupted and the high conductivity is achieved easily. Note that the weight-average molecular weight of the dispersant can be calculated by comparing the measurement value by gel permeation chromatography (GPC) with a calibration curve based on a reference sample (PEO/PEG). It is more preferable to use the average value obtained by a plurality of (for example, two) measurements as the weight-average molecular weight. Specific measurement conditions will be described in Examples below.

A molecular weight distribution (Mw/Mn), which is the ratio of the weight-average molecular weight (Mw) to a number-average molecular weight (Mn), of the dispersant is preferably generally 3 to 6, more preferably 4 to 5, and still more preferably 4.0 to 4.5, for example. In addition, the number-average molecular weight (Mn) of the dispersant is preferably generally 1000 or more, more preferably 2000 to 30000, and still more preferably 3000 to 20000, for example, although there is no particular limitation. In this specification, the term "number-average molecular weight" refers to the value measured under the measurement conditions similar to those for the weight-average molecular weight.

In this example embodiment, the content of the dispersant included in the nonaqueous CNT dispersion liquid is 10 to 500 parts by mass relative to 100 parts by mass of the CNTs. Thus, the effects of the example embodiments disclosed herein can be achieved suitably. The content of the dispersant is preferably higher than the amount thereof that is adsorbed on the surface of the CNTs. The content of the dispersant is preferably 50 parts by mass or more, more preferably 80 parts by mass or more, and particularly preferably 100 parts by mass or more relative to 100 parts by mass of the CNTs. The content of the dispersant is particularly preferably more than or equal to the content of the CNTs on the mass basis. Thus, the effects of the example embodiments disclosed herein are achieved easily and stably at the high level.

Although there is no particular limitation, the content of the dispersant is preferably 300 parts by mass or less and more preferably 200 parts by mass or less, and may be 150 parts by mass or less, for example, relative to 100 parts by mass of the CNTs. In the example embodiments disclosed herein, the CNTs can be dispersed at a high degree in the nonaqueous solvent even if the amount of dispersant to be used is relatively small. Therefore, the conductivity of the CNT is not easily interrupted and the high conductivity is achieved easily.

The concentration of the dispersant can vary depending on the amount and property of the CNTs to be used, the kind of the nonaqueous solvent to be used, the property of the dispersant, and the like. Therefore, in some example embodiments, when the entire nonaqueous CNT dispersion liquid is 100 mass%, the concentration of the dispersant is preferably generally 0.01 to 10 mass%, although there is no particular limitation. The concentration of the dispersant is more preferably 0.1 mass% or more, for example 0.2 mass% or more, and still more preferably 0.3 mass% or more. When the concentration of the dispersant is the predetermined value or more, the conductive network of the CNTs can be efficiently formed and the high conductivity is achieved easily. On the other hand, the CNTs easily get entangled and aggregate in the nonaqueous solvent and for this reason, it is particularly effective to apply the example embodiments disclosed herein. Moreover, the concentration of the dispersant is more preferably 5 mass% or less, for example 2 mass% or less, and still more preferably 1 mass% or less. When the concentration of the dispersant is the predetermined value or less, the dispersibility can be improved further and the effects of the example embodiments disclosed herein are achieved easily at the high level. Therefore, when the above range is satisfied, both the dispersibility and the conductivity can be achieved at the high level.

As (D) the additive, one kind or two or more kinds that have conventionally been known to be usable for this kind of application can be used as appropriate for the purpose of improving characteristics of the nonaqueous CNT dispersion liquid, for example. Specific examples of the additive include organic additives such as a dispersant with a weight-average molecular weight of less than 80000, an organic binder, an antioxidant, a defoaming agent, an antiseptic agent, a plasticizing agent, and a coloring agent (pigment, dye, or the like), a (non-fibrous) carbon material other than the CNT, such as carbon black or graphite, a metal oxide, and the like.

In the case where the nonaqueous CNT dispersion liquid includes the optional component, the content of the optional component (for example, (D) the additive) included in the nonaqueous CNT dispersion liquid is typically less than the content of the CNTs and/or the content of the dispersant. In one example, when the entire nonaqueous CNT dispersion liquid is 100 mass%, the concentration of the additive is preferably 5 mass% or less, more preferably 3 mass% or less, particularly 2 mass% or less, and still more preferably 1 mass% or less.

The nonaqueous CNT dispersion liquid as described above can be prepared by mixing (A) the CNTs, (B) the nonaqueous solvent, (C) the dispersant, and other optional component and dispersing or dissolving the CNTs, the dispersant, and the other optional component in the nonaqueous solvent. The CNTs and the dispersant may be input into the nonaqueous solvent entirely at one time or separately in two or more times. The mixing may be suitably performed using, for example, a conventionally known mixing device such as a disperser, a planetary mixer, a kneader, a propeller stirrer, an ultrasonic homogenizer, a magnetic stirrer, a jet mill, a ball mill, a bead mill, or a sand mill. Above all, from the viewpoints of reducing the contamination of a medium (media) and the like, the device that does not use the medium (medium-free device) is preferred. In addition, a circulation type dispersing device is preferable because the dispersion tends to progress uniformly, the shortening of the CNTs is reduced or prevented, the CNTs with the long average fiber length tend to be kept, and so on. Furthermore, a device that uses the shear force of high-speed stirring is preferable because the processing time can be shortened. One example of such a mixing device is a high-pressure homogenizer.

In some example embodiments, when the entire solid content of the nonaqueous CNT dispersion liquid is 100 mass%, (A) the CNTs occupy generally 50 mass% or more, preferably 80 mass% or more, more preferably 90 mass% or more, and still more preferably 95 mass% or more, and it is particularly preferable that the nonaqueous CNT dispersion liquid be substantially formed of the CNTs (98 mass% or more of the entire solid content be the CNTs). In such a case, it is particularly effective to apply the example embodiments disclosed herein. Note that the term "solid content" described here refers to the solid content that is separated (for example, filtered) by solid-liquid separation from the nonaqueous CNT dispersion liquid under the 25°C environment. In other words, the solid content is a component that is dispersed or precipitated in the solvent under the 25°C environment and does not include the component that is dissolved in the solvent.

The nonaqueous CNT dispersion liquids according to example embodiments disclosed herein can be used in various applications. For example, in the application of forming an electrode (positive electrode and/or negative electrode) of a secondary battery, the nonaqueous CNT dispersion liquid disclosed herein is provided (typically, applied) on a base material and dried, so that a conductive film can be formed on the base material. Therefore, as another aspect of the example embodiments disclosed herein, a manufacturing method for a conductive film including a step of applying the nonaqueous CNT dispersion liquid and a step of removing the nonaqueous solvent by drying the carbon nanotube dispersion liquid applied on the base material is provided. In this case, the nonaqueous CNT dispersion liquid may include an active material (positive electrode active material or negative electrode active material) and a resin binder. As the active material and the resin binder, various kinds of materials that have been conventionally known as being usable for this kind of application can be used as appropriate.

As described above, the nonaqueous CNT dispersion liquid according to this example embodiment includes (A) the CNTs with an average fiber length of 100 µm or more, (B) the nonaqueous solvent, and (C) the dispersant that is soluble in the nonaqueous solvent and has a weight-average molecular weight of 70000 or more, in which the content of the dispersant is 10 parts by mass or more and 500 parts by mass or less relative to 100 parts by mass of the CNTs.

With the use of the carbon nanotubes with an average fiber length of 100 µm or more, the conductive network is formed easily and the conductivity can be improved. Thus, by using the carbon nanotubes described above together with the dispersant with a weight-average molecular weight of 70000 or more in the nonaqueous solvent, the aggregation of the CNTs can be reduced or prevented relatively and the dispersibility of the CNTs can be improved as compared to the case in which a dispersant that does not satisfy the aforementioned weight-average molecular weight (specifically, a dispersant that is insoluble in the nonaqueous solvent or has a weight-average molecular weight of less than 80000) is used together, for example. As a result, the thickening of the dispersion liquid, in particular, the sudden thickening of the dispersion liquid in an initial stage of the dispersion process can be suitably reduced or prevented. In the end, the efficient dispersion process becomes possible, so that the application of excess stress on the CNTs in the dispersion process that results in the shortening of the CNTs or lower crystallinity of the CNTs can be reduced or prevented. Thus, the dispersion stability is excellent and the high conductivity can be achieved, and in these points, the combination of (A) to (C) disclosed herein can be said to be more advantageous.

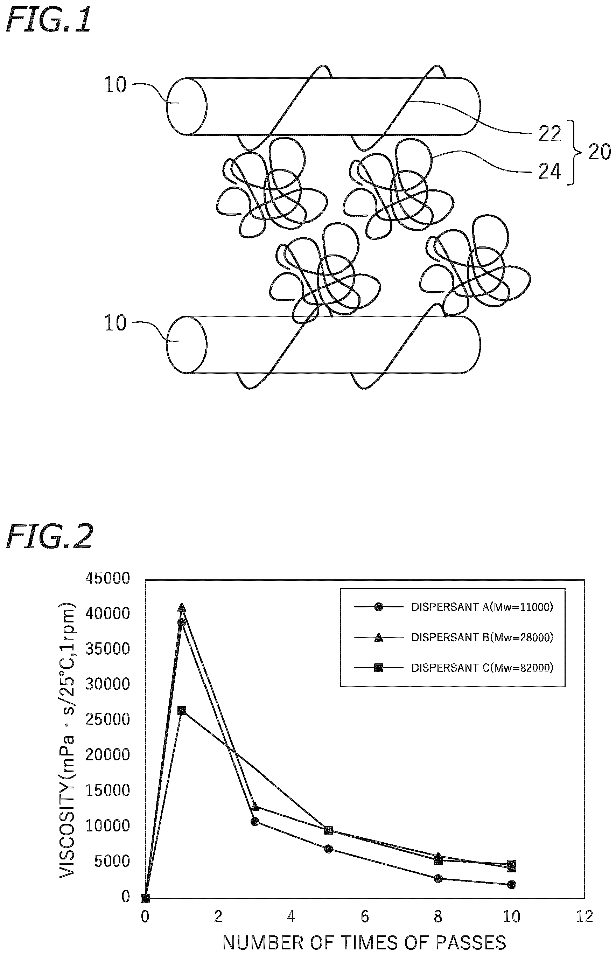

Note that although the limited interpretation is not intended in particular, the present inventors have considered the effects from the combination of the aforementioned (A) to (C) as follows. FIG. 1 is a schematic diagram of the nonaqueous CNT dispersion liquid (CNTs 10 and a dispersant 20) for describing the effects of the example embodiments disclosed herein. That is to say, as illustrated in FIG. 1, in the nonaqueous CNT dispersion liquid, the dispersant 20 can have a state 22 of being attached to a surface of the CNT 10 and a state 24 of being dissolved (or dispersed) in the nonaqueous solvent and held between the CNTs 10. The state 22 and the state 24 can be used by separate polymers of the dispersant 20 independently, or a portion of the same molecule in the dispersant 20 can be attached to the surface of the CNT to obtain the state 22 and the other portions can be exposed to the nonaqueous solvent to obtain the state 24. The dispersant in the state 24 of being dissolved or dispersed in the nonaqueous solvent tends to have a spherical shape and a larger size stereoscopically as the polymerization degree is higher. Therefore, the weight-average molecular weight is larger. That is to say, as the weight-average molecular weight is larger, the volume in the nonaqueous solvent tends to become larger. Then, when the stereoscopic size of the dispersant is larger in this way, the steric repulsion between the CNTs 10 tends to occur as illustrated in FIG. 1. Therefore, the CNTs 10 do not easily get close to each other and the dispersibility of the CNTs 10 can be improved relatively. Thus, it is considered that the thickening of the dispersion liquid can be reduced or prevented.

In the nonaqueous CNT dispersion liquid in this example embodiment, the average fiber length of the CNTs is 500 µm or less. In particular, the average fiber length of the CNTs is preferably 125 µm or more and 375 µm or less. This makes it difficult for the CNTs to get entangled and the dispersibility of the CNTs can be improved further. Accordingly, the effects of the example embodiments disclosed herein can be achieved easily at the high level and both the dispersibility and the conductivity can be achieved at the high level.

In the nonaqueous CNT dispersion liquid in this example embodiment, the weight-average molecular weight of the dispersant is 100000 or less. Thus, the dispersant easily enters between the bundles of the CNTs, so that the dispersibility of the CNTs can be improved more. In addition, the conductivity of the CNT is not interrupted easily and the high conductivity is achieved easily.

In the nonaqueous CNT dispersion liquid in this example embodiment, the nonaqueous solvent is the aprotonic polar solvent. Thus, the effects of the example embodiments disclosed herein are achieved easily at the high level. In addition, since the aprotonic polar solvent can dissolve many kinds of organic substances, particularly (C) the dispersant, the range of choices for the dispersant can be increased.

In the nonaqueous CNT dispersion liquid in this example embodiment, the dispersant includes a vinyl pyrrolidone polymer including a vinyl pyrrolidone unit as a repeating unit. In particular, the dispersant preferably includes polyvinylpyrrolidone. It has been known that the vinyl pyrrolidone polymer (for example, polyvinylpyrrolidone) is adsorbed on the surface of the CNT and wraps the CNT, that is, exhibits suitably the so-called wrapping effect. Therefore, by including the vinyl pyrrolidone polymer, the effects of the example embodiments disclosed herein are achieved easily at the high level.

In the nonaqueous CNT dispersion liquid in this example embodiment, the concentration of the carbon nanotubes is 0.01 mass% or more and 10 mass% or less. When the concentration of the CNTs is the predetermined value or more, the conductive network can be easily formed effectively and the conductivity can be improved. In addition, since the CNTs easily get entangled and aggregate in the nonaqueous solvent, it is particularly effective to apply the example embodiments disclosed herein. Furthermore, when the concentration of the CNTs is the predetermined value or less, the CNTs do not get close to each other easily and the effects of the example embodiments disclosed herein are achieved easily at the high level. Thus, the dispersibility of the CNTs can be improved more.

In the nonaqueous CNT dispersion liquid in this example embodiment, the concentration of the dispersant is 0.01 mass% or more and 10 mass% or less. When the concentration of the dispersant is the predetermined value or more, the dispersibility of the CNTs can be improved more and the effects of the example embodiments disclosed herein are achieved easily at the high level. In addition, when the concentration of the dispersant is the predetermined value or less, the conductivity of the CNT is not interrupted easily and the high conductivity is easily achieved. Thus, both the dispersibility and the conductivity can be achieved at the high level.

Examples related to example embodiments of the present invention will be described below. However, it is not intended to limit the present invention to the Examples described below.

Here, first, four kinds of CNTs (CNTs 1 to 4) with different average fiber lengths L as shown in Table 1, three kinds of dispersants (dispersants A to C, manufactured by DKS Co. Ltd.) with different molecular weights as shown in Table 2, and NMP as the nonaqueous solvent were prepared.

**Table 1: CNTs**

| | Average fiber length L | Average outer diameter |
|---|---|---|
| CNT 1 | 50 µm | 8.89 nm |
| CNT 2 | 125 µm | 8.89 nm |
| CNT 3 | 250 µm | 8.89 nm |
| CNT 4 | 375 µm | 8.89 nm |

**Table 2: Dispersants**

| | Kind | Number-average molecular weight Mn (average value of N = 2) | Weight-average molecular weight Mw (average value of N = 2) | Mw/Mn |
|---|---|---|---|---|
| Dispersant A | PVP K30 | 3,000 | 11,000 | 3.7 |
| Dispersant B | PVP K50 | 7,500 | 28, 000 | 3.7 |
| Dispersant C | PVP K90 | 20,000 | 82, 000 | 4.1 |

Using gel permeation chromatography (GPC), the molecular weight of the dispersant was measured under the following conditions. Then, by comparing the measurement value with the calibration curve based on the reference sample (PEO/PEG), the weight-average molecular weight and the number-average molecular weight were calculated. The results are shown in Table 2. Note that the reference sample that was used was obtained by mixing two kinds, PEG (Tosoh Corporation) and PEO (Wako Pure Chemical Industries, Ltd.), with the same structure. In addition, Table 2 shows the arithmetic average value when the measurement was conducted twice (N = 2). For example, in the dispersant C, N1 = 74000 and N2 = 90000, which results in an arithmetic average value of 82000.
Column: TSK gel gurdcolumn PW_{XL} (6.0 mmI.D. × 4 cm) + TSK gel GMPWXL (7.8 mmI.D. × 30 cm) × 2
Column temperature: 40°C
Transition phase: 0.1 M NaNO₃
Flow rate: 1.0 mL/min
Sample concentration: 0.5 mg/mL
Detector: RI (refractive index) detector (polarity (+))

Next, under the 25°C environment, the CNTs and the dispersant, which are the combination shown in Table 3 and Table 4, were added to a raw material tank of a high-pressure homogenizer (STAR BURST HJP-25001V2, manufactured by SUGINO MACHINE LIMITED), and the mixture was subjected to the dispersion process in the nonaqueous solvent (here, in NMP), so that the nonaqueous CNT dispersion liquid was prepared. Note that for each nonaqueous CNT dispersion liquid, the content of the dispersant was 100 parts by mass (equivalent) relative to 100 parts by mass of the CNTs and the concentration of each of the CNTs and the dispersant was set to 0.4 mass%. In addition, the dispersion process was performed using a single-nozzle chamber under conditions with a nozzle diameter of 0.15 mm and a pressure of 150 MPa.

Then, the viscosity of the nonaqueous CNT dispersion liquid in the dispersion process was monitored using a viscometer (TV-200E, manufactured by Toki Sangyo Co., Ltd.) at a rotation number of 1 rpm, and the peak value of the viscosity (mPa·s, typically the initial viscosity) was recorded. The results are shown in Table 3 and Table 4. Note that, in Tables, the column of "relative value" represents the relative value when the peak value (absolute value) in the case of using the dispersant A is 100, and the column of "evaluation" represents the result in accordance with criteria below.
P (poor): The relative value is more than 70.
G (good): The relative value is 70 or less.

**Table 3: Comparison 1 in viscosity and structure of nonaqueous CNT dispersion liquids**

| | Mw | CNT 1 (L = 50 µm) | | | CNT 2 (L = 125 µm) | | |
|---|---|---|---|---|---|---|---|
| | | Absolute value (mPa· s) | Relative value | Evaluation | Absolute value (mPa ·s ) | Relative value | Evaluation |
| Dispersant A | 11000 | 13480 | 100 (reference) | - | 26110 | 100 (reference) | - |
| Dispersant B | 28000 | 16120 | 120 | P | 24830 | 95 | P |
| Dispersant C | 82000 | 16740 | 124 | P | 14080 | 54 | G |

**Table 4: Comparison 2 in viscosity and structure of nonaqueous CNT dispersion liquids**

| | Mw | CNT 3 (L = 250 µm) | | | CNT 4 (L = 375 µm) | | |
|---|---|---|---|---|---|---|---|
| | | Absolute value (mPa· s) | Relative value | Evaluation | Absolute value (mPa· s) | Relative value | Evaluation |
| Dispersant A | 11000 | 38880 | 100 (reference) | - | 31720 | 100 (reference) | - |
| Dispersant B | 28000 | 41220 | 106 | P | 30990 | 98 | P |
| Dispersant C | 82000 | 26530 | 68 | G | 18660 | 59 | G |

As shown in Table 3, in a test example including the CNT 1 with an average fiber length L of 50 µm, the viscosity in the case of using the dispersant A with a weight-average molecular weight of 11000 was low in the first place. Therefore, increasing the weight-average molecular weight of the dispersant rather thickens the dispersion liquid and the effects of the example embodiments disclosed herein were not recognized.

As shown in Tables 3 and 4, in test examples including the CNTs 2 to 4 with an average fiber length L of 100 µm or more, the thickening of the dispersion liquid was remarkable when the dispersant A with a weight-average molecular weight of 11000 was used. In addition, even when the dispersant B with a weight-average molecular weight of 28000 was used, the change of the viscosity was hardly confirmed. With respect to these comparative examples, when the dispersant C with a weight-average molecular weight of 70000 or more was used, the reduction of the viscosity increased relatively and the thickening of the dispersion liquid was reduced or prevented well. FIG. 2 expresses the viscosity of the nonaqueous CNT dispersion liquid in the case of using the CNT 3 (CNTs with an average fiber length L of 250 µm) as one example. Note that the number of passes along the horizonal axis represents the number of times of circulating the nonaqueous CNT dispersion liquid with the high-pressure homogenizer. The above results indicate the significance of the example embodiments disclosed herein.

## Claims

1. A nonaqueous carbon nanotube dispersion liquid comprising:
carbon nanotubes (10) with an average fiber length, determined according to the description, of 125 µm or more and 375 µm or less;
a nonaqueous solvent being formed of an aprotonic polar solvent by 50 mass% or more; and
a dispersant (20) that is soluble in the nonaqueous solvent and has a weight-average molecular weight, determined according to the description, of 70000 or more; wherein
a content of the dispersant (20) is 10 parts by mass or more and 500 parts by mass or less relative to 100 parts by mass of the carbon nanotubes (10),
the dispersant (20) includes a vinyl pyrrolidone polymer including a vinyl pyrrolidone unit as a repeating unit with the dispersant (20) being formed of the vinyl pyrrolidone polymer by 98 mass% or more, and
the carbon nanotubes (10) have a concentration of 0.01 mass% or more and 10 mass% or less with respect to the entire carbon nanotube dispersion liquid.

2. The nonaqueous carbon nanotube dispersion liquid according to claim 1, wherein the carbon nanotubes (10) have an average fiber length of 500 µm or less.

3. The nonaqueous carbon nanotube dispersion liquid according to claim 1 or 2, wherein the dispersant (20) has a weight-average molecular weight of 100000 or less.

4. The nonaqueous carbon nanotube dispersion liquid according to any one of claims 1 to 3, wherein the nonaqueous solvent is an aprotonic polar solvent.

5. The nonaqueous carbon nanotube dispersion liquid according to any one of claims 1 to 4, wherein the dispersant (20) includes polyvinylpyrrolidone.

6. The nonaqueous carbon nanotube dispersion liquid according to any one of claims 1 to 5, wherein the dispersant (20) has a concentration of 0.01 mass% or more and 10 mass% or less.

## Patentansprüche

1. Nichtwässrige Kohlenstoffnanoröhren-Dispersionsflüssigkeit, umfassend:
Kohlenstoffnanoröhren (10) mit einer gemäß der Beschreibung bestimmten mittleren Faserlänge von 125 µm oder mehr und 375 µm oder weniger;
ein nichtwässriges Lösungsmittel, das zu 50 Masse-% oder mehr aus einem aprotonischen polaren Lösungsmittel gebildet ist; und
ein Dispergiermittel (20), das in dem nichtwässrigen Lösungsmittel löslich ist und ein gemäß der Beschreibung bestimmtes gewichtsmittleres Molekulargewicht von 70.000 oder mehr aufweist; wobei
ein Gehalt des Dispergiermittels (20) 10 Masseteile oder mehr und 500 Masseteile oder weniger, bezogen auf 100 Masseteile der Kohlenstoffnanoröhren (10), beträgt,
das Dispergiermittel (20) ein Vinylpyrrolidon-Polymer einschließt, welches eine Vinylpyrrolidon-Einheit als Wiederholungseinheit einschließt, wobei das Dispergiermittel (20) zu 98 Masse-% oder mehr aus dem Vinylpyrrolidon-Polymer gebildet ist, und
die Kohlenstoffnanoröhren (10) eine Konzentration von 0,01 Masse-% oder mehr und 10 Masse-% oder weniger, bezogen auf die gesamte Kohlenstoffnanoröhren-Dispersionsflüssigkeit, aufweisen.

2. Nichtwässrige Kohlenstoffnanoröhren-Dispersionsflüssigkeit gemäß Anspruch 1, wobei die Kohlenstoffnanoröhren (10) eine mittlere Faserlänge von 500 µm oder weniger aufweisen.

3. Nichtwässrige Kohlenstoffnanoröhren-Dispersionsflüssigkeit gemäß Anspruch 1 oder 2, wobei das Dispergiermittel (20) ein gewichtsmittleres Molekulargewicht von 100.000 oder weniger aufweist.

4. Nichtwässrige Kohlenstoffnanoröhren-Dispersionsflüssigkeit gemäß einem der Ansprüche 1 bis 3, wobei das nichtwässrige Lösungsmittel ein aprotonisches polares Lösungsmittel ist.

5. Nichtwässrige Kohlenstoffnanoröhren-Dispersionsflüssigkeit gemäß einem der Ansprüche 1 bis 4, wobei das Dispergiermittel (20) Polyvinylpyrrolidon einschließt.

6. Nichtwässrige Kohlenstoffnanoröhren-Dispersionsflüssigkeit gemäß einem der Ansprüche 1 bis 5, wobei das Dispergiermittel (20) eine Konzentration von 0,01 Masse-% oder mehr und 10 Masse-% oder weniger aufweist.

## Revendications

1. Liquide de dispersion de nanotubes de carbone non aqueux, comprenant :
des nanotubes de carbone (10) présentant une longueur moyenne de fibre, déterminée conformément à la description, de 125 µm ou plus et de 375 µm ou moins ;
un solvant non aqueux qui est formé d'un solvant polaire aprotique à raison de 50 % en masse ou plus ; et
un dispersant (20) qui est soluble dans le solvant non aqueux et a une masse moléculaire moyenne en poids, déterminée conformément à la description, de 70 000 ou plus ; dans lequel
la teneur en dispersant (20) est de 10 parties en masse ou plus et de 500 parties en masse ou moins pour 100 parties en masse des nanotubes de carbone (10),
le dispersant (20) inclut un polymère de vinylpyrrolidone incluant un motif vinylpyrrolidone en tant que motif répétitif, le dispersant (20) étant formé du polymère de vinylpyrrolidone à raison de 98 % en masse ou plus, et
les nanotubes de carbone (10) ont une concentration de 0,01 % en masse ou plus et de 10 % en masse ou moins par rapport au liquide de dispersion des nanotubes de carbone entier.

2. Liquide de dispersion de nanotubes de carbone non aqueux selon la revendication 1, dans lequel les nanotubes de carbone (10) présentent une longueur moyenne de fibre de 500 µm ou moins.

3. Liquide de dispersion de nanotubes de carbone non aqueux selon la revendication 1 ou 2, dans lequel le dispersant (20) a une masse moléculaire moyenne en poids de 100 000 ou moins.

4. Liquide de dispersion de nanotubes de carbone non aqueux selon l'une quelconque des revendications 1 à 3, dans lequel le solvant non aqueux est un solvant polaire aprotique.

5. Liquide de dispersion de nanotubes de carbone non aqueux selon l'une quelconque des revendications 1 à 4, dans lequel le dispersant (20) inclut de la polyvinylpyrrolidone.

6. Liquide de dispersion de nanotubes de carbone non aqueux selon l'une quelconque des revendications 1 à 5, dans lequel le dispersant (20) a une concentration de 0,01 % en masse ou plus et de 10 % en masse ou moins.
